(19) Europäisches Patentamt
European Patent Office
Office européen des brevets

(11) **EP 1 081 310 B1**

(12) **EUROPÄISCHE PATENTSCHRIFT**

(45) Veröffentlichungstag und Bekanntmachung des Hinweises auf die Patenterteilung:
**12.01.2005  Patentblatt 2005/02**

(51) Int Cl.⁷: **E04F 15/12**, E04F 15/20

(21) Anmeldenummer: **00116548.9**

(22) Anmeldetag: **01.08.2000**

(54) **Mehrschichtiger Fussbodenaufbau und Verfahren zu seiner Herstellung**

A multilayered floor structure and process for its fabrication

Revêtement de sol multicouche et procédé pour sa fabrication

(84) Benannte Vertragsstaaten:
**BE DE FR GB NL**

(30) Priorität: **10.08.1999  DE 19937314**

(43) Veröffentlichungstag der Anmeldung:
**07.03.2001  Patentblatt 2001/10**

(73) Patentinhaber:
• **Blocken, Wilfried**
  **3730 Hoeselt (BE)**
• **van Bunder, Thomas**
  **2018 Antwerpen (BE)**

(72) Erfinder:
• **Blocken, Wilfried**
  **3730 Hoeselt (BE)**
• **van Bunder, Thomas**
  **2018 Antwerpen (BE)**

(74) Vertreter: **Bauer, Wulf, Dr.**
  **Lindenallee 43**
  **50968 Köln-Marienburg (DE)**

(56) Entgegenhaltungen:
WO-A-96/30315          DE-A- 19 637 635
DE-B- 1 149 513        DE-U- 29 901 015

## Beschreibung

Die Erfindung bezieht sich auf einen mehrschichtigen Fußbodenaufbau nach dem Oberbegriff des Patentanspruchs 1 und ein Verfahren zu seiner Herstellung.

Dieser Fußbodenaufbaus ist aus der WO 96/30315 bekannt. Danach wird auf einen tragfähigen Untergrund in Form von zum Beispiel einer Betondecke, Holzdecke usw. ein Isolationsmörtel aufgebracht, der einen hohen Anteil von Körnern aus wiederaufbereitetem, zerkleinertem Hartpolyurethanschaum, weiterhin Zement und Abbindewasser aufweist. Die so gebildete Isolierschicht wird durch eine unmittelbar darüber aufgebrachte Lage Estrich abgedeckt. Gegebenenfalls kann eine Schicht zur Trittschalldämmung zwischen Isolationsmörtel und Estrich vorgesehen sein.

Dieser Aufbau eines Fußbodens hat sich grundsätzlich bewährt. Die Isolierschicht hat gute thermische Isoliereigenschaften, der gesamte Aufbau führt auch zu einer guten akustischen Isolierung. Günstig ist es weiterhin, dass ein Abfallprodukt verwendet werden kann, das in großem Umfang anfällt und als wertvolles Produkt verarbeitet wird. Polyurethan fällt aus verschiedenen industriellen Branchen an. Beispiele hierfür sind Stossstangen von Autos, isolierende Dachpanele, Kühlschränke, Isolierungen von Heizungen usw..

Das harte schaumförmige Polyurethan wird in ein Gemisch von Stücken und feinem Granulat zerkleinert, Stücke und Granulat werden vermischt. Weiterhin erfolgt ein Homogenisieren, indem die aus unterschiedlichen Ausgangsmaterialien gewonnenen Körner miteinander vermischt werden, weil die angelieferten Materialien unterschiedliche Dichte im Bereich von 35 kg/m$^3$ bis 200 kg/m$^3$ und sogar bis 600 kg/m$^3$ haben.

Bei der Isolierschicht nach der WO 96/30315 werden die Körner mit Zement und Wasser gemischt. Es wird ein Mörtel erstellt. Das abgebundene Produkt hat einen sehr hohen Volumenanteil an Körnern, die miteinander durch den Zementleim verbunden sind.

Dieser Isoliermörtel hat sich grundsätzlich als sehr günstig erwiesen, er hat aber den Nachteil, dass er einige Zeit benötigt, um abzubinden. Während dieser Zeit muss die Isolierschicht in Ruhe gelassen werden, sie darf also nicht betreten werden. Weiterhin müssen die Arbeiten ruhen, es kann also nicht weiter gearbeitet werden. Dies ist nachteilig. Zudem sind die akustischen Eigenschaften limitiert, so dass beim praktischen Einsatz eine zusätzliche Schicht zur Trittschalldämmung verwendet wird.

Hier setzt nun die Erfindung ein. Sie hat es sich zur Aufgabe gemacht, einen mehrschichtigen Fußbodenaufbau anzugeben, bei dem zwischen Auftragen der Isolierschicht und den sich anschließenden Arbeiten möglichst wenig Zeit gewartet werden muss, man also zügig weiter arbeiten kann. Dabei sollen die Vorteile des Fußbodenaufbaus nach dem Stand der Technik zumindest beibehalten, vorzugsweise verbessert werden, insbesondere soll die thermische Isolierfähigkeit, weiterhin die akustische Isolierfähigkeit erhöht werden.

Diese Aufgabe wird durch einen mehrschichtigen Fußbodenaufbau mit den Merkmalen des Patentanspruchs 1 gelöst, verfahrensmäßig wird sie gelöst durch das Verfahren mit den Merkmalen des Anspruchs 8.

Bei diesem mehrschichtigen Fußbodenaufbau hat die Isolierschicht kein eigenes Bindemittel, das die Körner der Isolierschicht miteinander verbindet. Die Verbindung der Körner untereinander wird vielmehr durch die mechanische Behandlung erreicht. Erfindungsgemäß macht man sich hier eine Eigenschaft von Körnern aus hartem Kunststoffschaum zunutze, die beispielsweise bei einem ausreichenden Anteil an Körnern aus Polyurethan mit zumindest teilweise, vorzugsweise gänzlich offenporiger Oberfläche beobachtet wurde. Bei Einlagern einer größeren Menge von teilweise offenporigen, unterschiedlich großen Körnern aus aufbereitetem Polyurethanhartschaum konnte überraschend festgestellt werden, dass sich die Körner zu einer kompakten Masse verdichten, also einen großen Körper bilden, der internen Zusammenhang hat. Dies zeigt sich wie folgt.

Schüttet man eine große aus teilweise offenporigem Menge von Körnern aus Polyurethanhartschaum auf einen Haufen, so bildet sich ein Schüttkegel. Wartet man nun einige Tage und Wochen, verfestigt sich dieser Kegel ohne irgendein Zutun von außen, er wird ein großer, kompakter Körper. Dies zeigt sich, wenn man die Körner wieder entnehmen will. Der Schüttwinkel ist nun nicht mehr wie bei der lockeren Schüttung, sondern man kann Böschungen von 90 Grad und darüber erreichen. Nach wie vor kann man die Körner mit etwas mechanischem Aufwand entnehmen. Es fließt aber nicht bei jeder Entnahme wieder Material nach, wie dies bei der frischen Schüttung oder trockenem Sand beispielsweise bekannt ist, vielmehr ist der Böschungswinkel nunmehr nicht definierbar. Es kann mit einem Radlader Material entnommen werden, ohne dass darüber befindliches Material nachfließt oder - rollt.

Diese Eigenschaft von Körnern aus Kunststoffschaum, insbesondere Hartpolyurethan, einen Zusammenhalt einzugehen, wird als Selbstverfestigung bezeichnet. Auf dieser Selbstverfestigung basiert die vorliegende Erfindung.

Um nun nicht die natürliche Selbstverfestigung, die mindestens einige Tage braucht, abwarten zu müssen, wird die locker aufgebrachte Schicht aus den Körnern durch eine mechanische Behandlung kompaktiert. Diese mechanische Behandlung umfasst zumindest eine Gewichtsbelastung zum Untergrund hin. Sie kann zusätzlich noch ein Rütteln, Stampfen usw. aufweisen. Durch diese mechanische Behandlung wird die Selbstverfestigung in einer relativ kurzen Zeit, beispielsweise maximal wenige Minuten Behandlung pro Quadratmeter, erreicht.

Die so erstellte Isolierschicht wird durch eine staubdichte, flexible Abdeckschicht, beispielsweise Plastikfolie, abgedeckt. Diese vermeidet einerseits ein Stauben, das Freikommen von Körnern usw. und ermöglicht zudem ein einfacheres Aufbringen von zum Beispiel der Betonschicht für den Estrich oder einer anderen, tragenden Lage, zum Beispiel aus Holz, Fermazell (Markenname) usw.. Sie bildet vorzugsweise eine Wassersperre. Dadurch kann die Isolierschicht nicht das Wasser aus der Betonschicht aufnehmen.

Der besondere Vorteil des erfindungsgemäßen Fußbodenaufbaus liegt darin, dass kein Abbinden des Bindemittels, das die Körner miteinander verbindet, abgewartet werden muss. Es kann vielmehr zügig weiter gearbeitet werden, nachdem die mechanische Behandlung durchgeführt wurde. Zudem wird das Bindemittel gespart. Eine Zeitverzögerung tritt damit nicht mehr auf.

Wenn man jedoch die Körner mit Zement vermischt, um so zu einem einsatzfähigen Trockenmörtel zu kommen, wie er in der o.g. WO 96/30315 beschrieben ist, bindet der Zement später, wenn bereits der sonstige Aufbau erfolgt ist, ab. Auf diese Weise sind später die Körner nicht im wesentlichen durch Selbstverfestigung, sondern durch Zementbrücken miteinander verbunden. Das so erhaltende, starre Gebilde hat schlechtere akustische Eigenschaften als die Isolierschicht nach der Erfindung, die zwar einen Zusammenhalt, aber immer noch Flexibilität und Nachgiebigkeit aufweist. Nun sind auch die thermischen Eigenschaften der erfindungsgemäßen Isolierschicht besser als bei der vorbekannten Isolierschicht.

Das erfindungsgemäße Verfahren ist so ausgelegt, dass der mehrschichtige Fußbodenaufbau nach den Vorrichtungsansprüchen erhalten wird. In einer Verbesserung ist es möglich, auf die erstellte Isolierschicht fertige Platten aus Isoliermaterial, beispielsweise Polyurethanschaumplatten aufzulegen, die dann auch die Funktion der Abdeckschicht übernehmen können.

Beim Zerkleinern von größeren Teilen aus Hartschaumstoff fällt immer auch ein Feinanteil und ein Feinstanteil an. Diese sollen in einer verbesserten Ausführung der Erfindung durchaus verwendet werden. Es werden also nicht nur Körner mit einer Größe von bis zu 8, oder bis zu 12 oder bis zu 20 mm für die Isolierschicht eingesetzt, vielmehr wird auch ein Feinstoffanteil und ein Feinststoffanteil verwendet. Dadurch werden die Hohlräume zwischen den größeren Körnern ausgefüllt und es wird eine kompaktere Schicht erreicht.

Als Abdeckschicht kommen insbesondere flexible, wasserundurchlässige Folien in Betracht, z. B. Polyethylenfolie. Die Abdeckschicht kann aber auch eine Filzmatte, eine Mineralwollmatte und dergleichen sein.

In einer bevorzugten Ausführung haben die Körner, zumindest die größeren Körner, Oberflächen, die offenporige Flächen haben. Es ist also der überwiegende Anteil der Oberfläche, vorzugsweise die gesamte Oberfläche offenporig. Es hat sich gezeigt, dass bei ausreichendem Kontakt zweier offenporiger Flächen benachbarter Körner die beschriebene Selbstverfestigung erreicht wird.

Weiterhin hat es sich als günstig erwiesen, wenn nach der mechanischen Behandlung der zwischen den Körnern verbleibende Leerraum kleiner als 20 %, vorzugsweise kleiner als 10 und insbesondere kleiner als 5 % des Gesamtvolumens ist, die Prozente sind jeweils Volumenprozente. Eine relativ kompakte Masse als Isolierschicht hat die notwendige Tragfähigkeit für die darüber liegende Estrichschicht.

Der Wärmeleitwert der Isolierschicht beträgt typischerweise:

lambda = 0,05 W/mK, und liegt zwischen 0,04 und 0,06 W/mK.

Wenn die akustischen Eigenschaften verbessert werden sollen, kann eine isolierende Matte, beispielsweise eine sogenannte Akustikmatte als Abdeckschicht eingesetzt werden. Sie kann auch auf die Isolierschicht aufgelegt und mit einer flexiblen Abdeckfolie überdeckt werden.

In einer bevorzugten Weiterbildung der Erfindung wird die durch die mechanische Behandlung kompaktierte Isolierschicht oberflächlich mit einem Binder übersprüht, dieser ist vorzugsweise anorganisch, wie beispielsweise eine dünnflüssige Zementsuspension. Es können aber auch organische Bindemittel eingesetzt werden, wie beispielsweise Polyurethane, Acrylate, Vinylacetate, Styrenbutadiene usw..

Die Estrichschicht aus Beton wird in üblicher, bekannter Weise hergestellt. Sie hat eine innenliegende Armierung aus einem Metallgitter, vorzugsweise Eisengitter. Dieses wird vor dem Aufbringen der Betonschicht auf die Abdeckfolie gelegt und vorzugsweise mit Abstandshaltern von dieser beabstandet, so dass es in der Schicht eingebettet ist.

Weitere Vorteile und Merkmale der Erfindung ergeben sich aus den übrigen Ansprüchen und der Beschreibung einschließlich der nun folgenden Erläuterung von bevorzugten Ausführungsbeispielen der Erfindung, die unter Bezugnahme auf die Zeichnung erfolgen. In der Zeichnung zeigen:

Fig. 1:    einen Schnitt durch eine locker aufgebrachte Isolierschicht (links) nach der Erfindung und eine kompaktierte Isolierschicht (rechts) und

Fig. 2:    einen Schnitt durch einen fertiggestellten mehrschichtigen Fußbodenaufbau.

In den Figuren ist ein tragfähiger Untergrund in Form einer Betonplatte 20 dargestellt. Auf ihn ist eine Isolierschicht 22 unmittelbar aufgetragen. Als Grundstoff für sie dient wiederaufbereitetes Polyurethan in Schaumform, das aus verschiedenen industriellen Branchen kommt. Einige Beispiele hierfür sind Stossstangen von Autos, isolierende Dachpanele, Kühlschränke, Isoliermatten, die Hart-Polyurethan (hartes PUR) aufweisen.

Dieser harte Polyurethanschaum wird in ein Gemisch von Stücken und freiem Granulat mit einer Korngröße von typischerweise kleiner als 12 mm, zumeist kleiner als 8 mm vermahlen und miteinander vermischt, um ein konstantes Volumen zu bekommen. Üblicherweise sind die angelieferten Ausgangsmaterialien unterschiedlich, so dass unterschiedliche Dichten im Bereich von 35 kg/m$^3$ bis mehr als 200 kg/m$^3$ und bis zu 600 kg/m$^3$ zusammenkommen.

Auf die Stückgröße des Polyurethans kommt es nicht entscheidend an. Es hat sich aber gezeigt, dass Körner unter 20 mm, vorzugsweise unter 8 mm sich günstig verarbeiten lassen. Beim Zerkleinern fällt auch immer ein Feinstoffanteil und ein Feinststoffanteil an. Letzterer ist staubförmig. Beide Anteile bewirken, dass sonst auftretende Hohlräume zwischen den größeren Körnern gefüllt werden.

Für die Herstellung einer Isolierschicht 22 werden derartige Körner auf die Betonplatte 20 aufgebracht, beispielsweise mit einer Schichtdicke von etwa 10 cm. Die Schüttung ist locker. Es wird kein zusätzliches Bindemittel oder dergleichen eingesetzt.

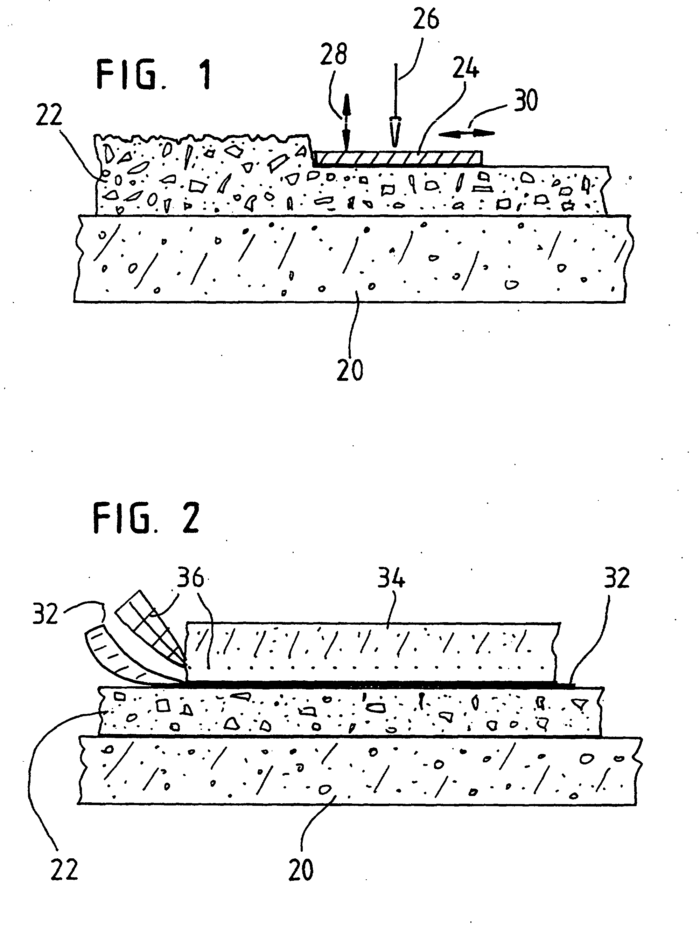

Es folgt nun eine mechanische Behandlung, die den Zweck verfolgt, die Schicht zu verdichten und dabei einen Zusammenhalt der Körner der Schicht zu erreichen. Hierzu wird eine Vorrichtung verwendet, wie sie in Figur 1 skizziert ist. Sie hat eine Platte 24, die oben auf der Schicht aufliegt. Die Platte ist durch ein Gewicht im Sinne des Pfeils 26 belastet. Zusätzlich kann noch eine Bewegung im Sinne des Doppelpfeils 28 erfolgen, dabei wird mit kurzen Hüben im Frequenzbereich 0,1 bis 10 Hz eine vertikale Bewegung der Platte durchgeführt. Ebenso und alternativ zu dieser verdichtenden Bewegung kann auch eine Querbewegung allein oder in Kombination mit der Bewegung im Sinne des Doppelpfeils 28 erfolgen. Dabei wird im Sinne des Doppelpfeils 30 die Platte 24 in horizontale Bewegungen gebracht. Die Frequenz kann zwischen 0,1 Hz und 100 Hz liegen, sie kann auch noch höher sein.

Andere Vorrichtungen zur mechanischen Behandlung sind möglich, beispielsweise ist ausschließlich Gewichtsbelastung ausreichend, zusätzliche Bewegung wie ein Rütteln oder Stampfen verkürzt die Zeit bis zur Selbstverfestigung.

Insbesondere hat sich herausgestellt, dass eine mechanische Verfestigung mittels einer Walze besondere Vorteile aufweist. Die Gewichtskraft einer z.B. wassergefüllten Walze mit einem Gesamtgewicht von 130 kg kann bereits ausreichend sein, so dass eine zusätzliche Verfestigung durch Scherbelastung der Isolierschicht mittels Rüttlern nicht erforderlich ist.

Nach der mechanischen Behandlung ist die Dicke der Isolierschicht 22 auf etwa 6 bis 7 cm geschrumpft, die Isolierschicht 22 hat nun eine glattere Oberfläche als die lockere Schüttung.

Auf diese Oberfläche wird nun eine Polyetylenfolie als flexible Abdeckschicht 32 gelegt.

Während der mechanischen Behandlung und auch zum Aufbringen der Abdeckschicht 32 kann die Isolierschicht 22 betreten werden, vorzugsweise werden auf die Isolierschicht 22 große Platten gelegt, alternativ wird ein Bewehrungsgitter aufgelegt oder die Arbeiter tragen Schuhe mit großflächigen Sohlen, beispielsweise Schneeschuhe. Unmittelbar nach Aufbringen der Abdeckschicht kann eine Estrichschicht 34 aufgebracht werden, dies geschieht nach dem Stand der Technik. Die Estrichschicht 34 ist durch eine innenliegende Bewehrung 36 in Form einer netzförmigen Matte bewehrt. Andere Bewehrungen sind möglich, beispielsweise stabförmige Bewehrungen, Bewehrungen durch Fasern und dergleichen.

Erreicht wird der in Figur 2 gezeigte mehrschichtige Fußbodenaufbau.

Die Selbstverfestigung und das Kompaktieren der Isolierschicht 22 kann durch Zugabe einer Flüssigkeit, insbesondere Wasser, beschleunigt und verbessert werden, es wird dadurch auch die Staubbildung verringert. Hierzu wird auf das nachfolgende Beispiel verwiesen:

75 Liter Polyurethanschaumkörner werden mit 30 l Wasser gemischt und gleichmäßig auf die Oberfläche eines tragenden Untergrunds ausgebreitet mit einer Dicke von etwa 7,5 cm. Durch eine mechanische Behandlung, bei der ausschließlich Druck auf die Oberfläche ausgeübt wird, wird diese Schicht auf eine Schichtdicke von 5 cm reduziert. Die Schicht wird sodann durch eine Plastikfolie abgedeckt. Auf diese wird eine Estrichschicht mit 5 cm Dicke aufgebracht. Diese Estrichschicht ist bewehrt durch eine Eisenmatte aus Stäben mit 2 mm Durchmesser und Öffnungen von 5 x 5 cm. Sie wird auf die Plastikfolie aufgelegt und hat durch geeignete Abstandshalter einen Abstand von dieser Plastikfolie.

In einer Alternativen wird auf die Abdeckschicht 32 zunächst die Bewehrung 36, zum Beispiel die oben erwähnte Eisenmatte aufgelegt. Danach kann die Anordnung betreten werden. Es wird Estrich aufgebracht. Die Bewehrung 36 wird angehoben, damit sie sich in der Estrichschicht befindet.

In einer weiteren Alternative wird unmittelbar auf die Abdeckschicht 32, die die Isolierschicht 22 überdeckt, eine Schicht aus tragfähigen Platten, insbesondere Holzplatten mit Nut und Feder aufgebracht.

Bei der Herstellung der Isolierschicht hat es sich als sehr vorteilhaft erwiesen, das Material der Isolierschicht 22, also die Körner aus hartem Kunststoffschaum, mit Wasser zu versetzen. Vorzugsweise wird dabei weniger als 50 Vol.-% Wasser dem eingesetzten Volumen an Körnern aus hartem Kunststoffschaum beigemischt, insbesondere 25 bis 30 l Wasser für 75 l Kunststoffschaum. Volumenmäßig liegt der Bereich vorzugsweise zwischen 25 und 40 Vol.-% Wasser pro Volumen Kunststoffschaum. Auf diese Weise wird Staub gebunden. Weiterhin ist die Mischung aus Wasser und Kunststoffschaumkörnern pumpfähig. Dies erleichtert den Transport zum Einsatzort. Weiterhin lässt sich das feuchte Material der Isolierschicht viel besser kompaktieren als trockenes Material. So hat es sich gezeigt, dass bei einem Drucktest für eine Dickenänderung einer ursprünglich 80 mm dicken Isolierlage 22 um 5 % bei nasser Kompaktierung eine etwas mehr als dreimal so hohe Belastung notwendig ist, wie bei trockener Kompaktierung. Dies zeigt, das die nasse Kompaktierung erhebliche Vorteile hat. Bei Messen der Abschwächung von Körperschall nach EN-ISU 717 zeigt eine 16 cm dicke Isolierschicht 22 eine Schallschwächung von 24 dB im Vergleich zu einem i-dentischen Aufbau ohne diese Isolierschicht 22. Die Isolierschicht 22 zeigt ein gutes Verhalten bei Messung der Ermüdung. Hierbei wird eine zunächst grob belastete Isolierschicht 22 mindestens 5.000 mal wechselnden Belastungen von mindestens 2 kN/m$^2$ unterworfen und die Verringerung der Schichtdicke gemessen. Auch hier zeigte eine nasse Kompaktierung einen etwa halb so großen Schwund wie eine trockene Kompaktierung. Dabei war die zu messende Dickenreduzierung ohnehin recht gering, sie lag bei etwa 3-4 %.

Mittels Siebmessungen wurde die Zusammensetzung eines Körnergemisches zur Herstellung einer Isolierschicht 22 ermittelt, unter deren Verwendung der Fußbodenaufbau die erfindungsgemäßen Vorteile verwirklicht. Folgende Massenzusammensetzung wurde gefunden:

| Korndurchmesser (mm) | Anteil (Massen-%) |
| --- | --- |
| > 12 | 11 |
| 6 - 12 | 26 |
| 4 - 6 | 9 |
| 2 - 4 | 13 |
| 1 - 2 | 5 |
| < 1 | 37 |

In einem weiteren Ausführungsbeispiel bestehen die zum Aufbau der Isolierschicht 22 benötigten Körner aus schaumartigem PUR-Kunststoff, der aus Isocyanaten, Polyolefinen und Additiven mit pilzhemmenden und feuerhemmenden Eigenschaften unter Verwendung eines Treibmittels hergestellt. Aus diesem PUR-Schaumstoff wird ein Granulat mit definierten Eigenschaften hergestellt, z.B. wird durch Wahl der Parameter des Granulierungsverfahrens die oben aufgeführte vorteilhafte Größenverteilung der Korngrößen eingestellt. Dabei weisen die einzelnen Körner vorteilhaft eine solche Geometrie auf, dass die Körner wie die Teile eines Puzzles ineinander greifen.

Nach der Herstellung der Körner werden diese gewaschen und getrocknet. Nach der Trocknung haften die Körner des Granulats nur locker aneinander, das Granulat ist fließfähig.

Durch Zugabe bestimmter Zuschlagstoffe zum Granulat werden dessen mechanische Eigenschaften optimiert, hierbei insbesondere die Rheologie des Granulats, seine hygroskopischen Eigenschaften und das Fließverhalten. Weiterhin werden die mechanischen und thermischen Eigenschaften des Granulats im Hinblick auf die Verwendung im Fußbodenbau nach dem erfindungsgemäßen Verfahren optimiert. Diese Zuschlagstoffe werden durch Feuchtigkeit aktiviert, insbesondere durch aus dem Untergrund des erfindungsgemäßen mehrschichtigen Fußbodenaufbaus stammende Feuchtigkeit.

Es hat sich als vorteilhaft herausgestellt, das Granulat gemäß dieses Ausführungsbeispiels trocken zu lagern und zur Anwendung bei der Erstellung eines erfindungsgemäßen mehrschichtigen Fußbodenaufbaus zubringen.

Das Verfahren zur Erstellung eines erfindungsgemäßen mehrschichtigen Fußbodenaufbaus entspricht dem des bereits im Rahmen der voranstehenden Ausführungsbeispiele beschriebenen Verfahren. Zur Verfestigung des locker aufgebrachten Granulats zur Isolationsschicht 22 wird das Granulat mittels einer wassergefüllten Walze mit einem Gesamtgewicht von 130 kg um 2/7 Volumenanteile zur Isolationsschicht 22 verfestigt.

Nach der Verfestigung wird die Isolationsschicht mit einer flexiblen Abdeckschicht in Form von Polyethylenfolien abgedeckt. Hierauf wird die tragende Deckschicht 34 aufgebracht. Gute isolierende Eigenschaften des Fußbodenaufbaus können beispielsweise durch Aufbringen eines Sand-Zement-Estrichs gemäß Norm WTCB TV 189 mit einer Mindestdicke von 6 cm auf einer Isolationsschicht 22 wie voranstehend beschrieben mit einer Dicke von mindestens 3 cm erzielt werden. Dabei sollte der Sand-Zement-Estrich eine Dichte von mindestens 300 kg/m$^3$ aufweisen. Weiterhin sollte der Sand-Zement-Estrich armiert werden.

Ein erfindungsgemäßer mehrschichtiger Fußbodenaufbau gemäß dieses Ausführungsbeispiels erreicht die folgenden mechanischen und akustischen Eigenschaften:

Dichte: 200 kg/m3

Körperschalldämpfung: Lnw = 53 dB, DLw = 24 dB, Kategorie Ia gemäß Norm WTCB DE 631X837
Wärmeleitung: Lambda = 0,04 W/mK
Statische Verformbarkeit: 0,25 mm/cm bei 2 kPa gemäß Norm WTCB DE 609 8040
Dynamische Verformbarkeit: < 0,3 mm/cm nach 15000 Zyklen mit 2-6 kPa gemäß Norm WTCB AC 3135-N

Im Rahmen dieses Ausführungsbeispiels entsprechen 70 l gebrauchsfertigen Granulats einem Volumen von 50 l der Isolationsschicht 22, d.h. mit 70 l Granulat kann 1 m$^2$ Isolationsschicht 22 mit einer Schichtdicke von 5 cm erstellt werden.

**Patentansprüche**

1.  Mehrschichtiger Fußbodenaufbau bestehend aus

    -   einer Isolierschicht (22), die auf einem tragfähigen Untergrund aufgetragen ist, die mindestens mehrere Zentimeter dick ist, die aus Körnern aus hartem Kunststoffschaum besteht, und die durch eine mechanische Behandlung kompaktiert ist, welche mechanische Behandlung eine Gewichtsbelastung der locker aufgebrachten Isolierschicht (22) einschließt,
    -   einer Abdeckschicht (32), die auf der Isolierschicht (22) aufliegt und sie nach oben hin abdeckt, und
    -   einer tragenden Deckschicht, zum Beispiel eine Estrichschicht (34) mit einer innenliegenden Bewehrung (36) in Form eines Gitters

    **dadurch gekennzeichnet**, das di Isolierschicht (22) kein Bindemittel aufweist und die Körner miteinander durch die Gewichtsbelastung ,jedoch ohne ein separates Bindemittel einen Zusammenhalt eingehen, und dass die Abdeckschicht (32) durch eine staubdichte, flexible Schicht, insbesondere eine Abdeckfolie, gebildet ist.

2.  Mehrschichtiger Fußbodenaufbau nach Anspruch 1, **dadurch gekennzeichnet, dass** die Körner Oberflächen haben, die zumindest teilweise überwiegend offenporig sind, so dass benachbarte Körner in Art eines Puzzles miteinander verzahnt in Eingriff kommen.

3.  Mehrschichtiger Fußbodenaufbau nach Anspruch 1, **dadurch gekennzeichnet, dass** die Körner die Eigenschaft zum wechselseitigen Verzahnen benachbarter Körner aufweisen.

4.  Mehrschichtiger Fußbodenaufbau nach Anspruch 1, **dadurch gekennzeichnet, dass** die Körner bestehen aus einem Grobstoffanteil mit Korngrößen unterhalb 20 mm, einem Feinstoffanteil mit Korngrößen unterhalb 1 mm und einem pulverförmigen Feinstoffanteil.

5.  Mehrschichtiger Fußbodenaufbau nach Anspruch 1, **dadurch gekennzeichnet, dass** als Körner wiederaufbereitetes, zerkleinertes, schaumförmiges Hartpolyurethan verwendet wird.

6.  Mehrschichtiger Fußbodenaufbau nach Anspruch 1, **dadurch gekennzeichnet, dass** die Körner angefärbt sind, insbesondere mittels eines anorganischen Farbstoffs gefärbt sind.

7.  Mehrschichtiger Fußbodenaufbau nach Anspruch 1, **dadurch gekennzeichnet, dass** nach Gewichtsbelastung der zwischen den Körnern verbleibende Leerraum kleiner ist als 20 %, vorzugsweise kleiner als 10 und insbesondere kleiner als 5 Vol. - % bezogen auf das Gesamtvolumen.

8.  Verfahren zum Herstellen eines mehrschichtigen Fußbodenaufbaus nach Anspruch 1, bei dem

    -   eine Isolierschicht (22), die auf einen tragfähigen Untergrund aufgetragen wird, mindestens mehrere Zentimeter dick ist und hergestellt ist aus Körnern aus einem harten Kunststoffschaum und ohne Zugabe eines Bindemittels, wobei diese Isolierschicht (22) durch eine mechanische Behandlung, die eine Gewichtsbelastung der locker aufgebrachten Isolierschicht (22) einschließt, so verdichtet und kompaktiert wird, dass die Körner miteinander einen Zusammenhalt eingehen,
    -   anschließend die so hergestellte Isolierschicht (22) mit einer staubdichten, flexiblen Abdeckschicht (32), insbesondere einer Abdeckfolie, abgedeckt wird und
    -   schließlich eine tragende Deckschicht, insbesondere eine Estrichschicht (34) mit einer innenliegenden Bewehrung (36) in Form eines Gitters, aufgebracht wird.

**9.** Verfahren nach Anspruch 8, **dadurch gekennzeichnet, dass** die Körner aus einem harten Kunststoffschaum vor dem Auftragen der Isolierschicht mit Wasser versetzt werden, insbesondere weniger als 50 Vol.-% Wasser, so dass das Material der Isolierschicht pumpfähig ist und sich einfacher kompaktieren lässt.

**10.** Verfahren nach Anspruch 8, **dadurch gekennzeichnet, dass** die mechanische Behandlung mindestens eines der folgenden Verfahren einschließt: Rütteln, Stampfen, Aufbringen eines flächigen Gewichts, Ausüben eines Drucks mit einer Abzugslatte.

**Claims**

**1.** A multilayered floor structure consisting of

- an insulating layer (22) that is applied onto a good bearing sub-floor, that is at least several centimeters thick, that consists of granules of hard plastic foam without the granules being interconnected by a separate binder and that is compacted by a mechanical treatment which includes loading the loosely applied insulating layer (22) with weight so that the granules are caused to combine together,
- a preferably flexible cover layer (32), more specifically a cover foil, that lies on said insulating layer (22) and covers it toward the top and
- a bearing surface layer, for example a screed layer (34) having an inlaid reinforcement grid (36).

**2.** The multilayered floor structure in accordance with claim 1, **characterized in that** the granules have surfaces that have at least partially for their major part open pores so that neighboring granules are caused to interlock in the manner of a puzzle.

**3.** The multilayered floor structure in accordance with claim 1, **characterized in that** the granules exhibit the capacity of interlocking with neighboring granules.

**4.** The multilayered floor structure in accordance with claim 1, **characterized in that** the granules consist of a coarse grain fraction with a grain size of less than 20 mm, a fine grain fraction with a grain size of less than 1 mm and a finely ground fraction of finest grains.

**5.** The multilayered floor structure in accordance with claim 1, **characterized in that** reprocessed, shredded hard polyurethane foam is used as the granules.

**6.** The multilayered floor structure in accordance with claim 1, **characterized in that** the granules are dyed, more specifically by means of an inorganic dye.

**7.** The multilayered floor structure in accordance with claim 1, **characterized in that**, after loading the layer with weight, the voids remaining between the granules are less than 20 %, preferably less than 10 and more specifically less than 5 % by volume of the overall volume.

**8.** A method of manufacturing a multilayered floor structure in accordance with claim 1, wherein

- an insulating layer (22) of at least several centimetres thick and made from granules of a hard plastic foam is applied onto a good bearing sub-floor, said insulating layer (22) being densified and compacted by a mechanical treatment which includes loading the loosely applied insulating layer (22) with weight in such a manner that the granules are caused to combine together,
- the thus manufactured insulating layer (22) is next covered with a flexible cover layer (32), more specifically with a cover foil, and
- a good bearing layer, more specifically a concrete layer, is eventually applied as a screed floor having an inlaid reinforcement grid (36).

**9.** The method of manufacturing a multilayered floor structure in accordance with claim 8, **characterized in that**, prior to applying the insulating layer, the granules of hard plastic foam are mixed with water added in an amount of more specifically less than 50 % by volume so that the material of the insulating layer is pumpable and can be more easily compacted.

**10.** The method of manufacturing a multilayered floor structure in accordance with claim 8, **characterized in that** the mechanical treatment includes at least one of the following methods: vibrating, pestling, applying a planar weight, exerting a pressure using a stripper bar.

## Revendications

**1.** Structure de plancher multicouche constituée par

- une couche isolante (22) d'une épaisseur d'au moins plusieurs centimètres posée sur une partie portante qui est constituée de granules de mousse en plastique dur dans laquelle les granules ne sont pas liées entre elles par un liant à part et qui est compactée par un traitement mécanique qui inclut le fait de charger d'un poids la couche isolante (22) simplement posée sur la partie portante de sorte que les granules s'agglomèrent,
- une couche de recouvrement (32) de préférence flexible, notamment une feuille de recouvrement, qui repose sur la couche isolante (22) qu'elle recouvre vers le haut et
- une couche superficielle portante, par exemple une chape (34) dans laquelle est posée une armature (36) en treillis.

**2.** Structure de plancher multicouche selon la revendication 1, **caractérisée en ce que** les granules ont des surfaces qui ont du moins en partie des pores en grande partie ouverts de sorte que des granules voisines s'emboîtent les unes dans les autres à la manière d'un puzzle.

**3.** Structure de plancher multicouche selon la revendication 1, **caractérisée en ce que** les granules, lorsqu'elles sont voisines, ont la propriété de s'emboîter les unes dans les autres.

**4.** Structure de plancher multicouche selon la revendication 1, **caractérisée en ce que** les granules sont constituées par une fraction de gros grains d'une granulométrie inférieure à 20 mm, d'une fraction de grains fins d'une granulométrie inférieure à 1 mm et d'une fraction de grains pulvérisés.

**5.** Structure de plancher multicouche selon la revendication 1, **caractérisée en ce que** l'on utilise comme granules de la mousse de polyuréthane dur recyclé et fractionné.

**6.** Structure de plancher multicouche selon la revendication 1, **caractérisée en ce que** les granules sont teintes, notamment au moyen d'un colorant inorganique.

**7.** Structure de plancher multicouche selon la revendication 1, **caractérisée en ce que**, après avoir chargé la couche d'un poids, les interstices entre les granules représentent, en volume, moins de 20 %, de préférence moins de 10 et notamment moins de 5 % du volume total.

**8.** Procédé de réalisation d'une structure de plancher multicouche selon la revendication 1, où

- on applique sur une partie portante une couche isolante (22) d'une épaisseur d'au moins plusieurs centimètres réalisée à partir de granules de mousse en plastique dur, cette couche isolante (22) étant compactée et densifiée par un traitement mécanique qui inclut le fait de charger d'un poids la couche isolante (22) simplement posée sur la partie portante de telle sorte que les granules s'agglomèrent,
- on recouvre ensuite la couche isolante (22) ainsi réalisée d'une couche de recouvrement (32) flexible, notamment d'une feuille de recouvrement, et
- on pose finalement une couche portante, notamment une couche de béton faisant office de chape dans laquelle est posée une armature (36) en treillis.

**9.** Procédé de réalisation d'une structure de plancher multicouche selon la revendication 8, **caractérisé en ce qu'**avant de poser la couche isolante on mélange les granules en mousse de plastique dur à de l'eau, notamment ajoutée dans une proportion inférieure à 50 % en volume, de sorte que le matériau de la couche isolante est pompable et peut être compacté plus facilement.

**10.** Procédé de réalisation d'une structure de plancher multicouche selon la revendication 8, **caractérisé en ce que** le traitement mécanique inclut au moins l'un des procédés suivants : vibrage, damage, application d'un poids plat, pression exercée au moyen d'une lame racleuse.

FIG. 1

FIG. 2